# EUROPEAN PATENT SPECIFICATION

(11) **EP 0 703 811 B1**
(45) Date of publication and mention of the grant of the patent: **02.05.1997**
(21) Application number: 94921244.3
(22) Date of filing: 10.06.1994
(51) Int. Cl.: A63B 37/00

(54) **IONOMER BLENDS FOR GOLF BALL COVERS**
IONOMERMISCHUNGEN FÜR GOLFBALLHÜLLEN
MELANGES D'IONOMERES POUR REVETEMENTS DE BALLES DE GOLF

(30) Priority: 18.06.1993 US 77581
(43) Date of publication of application: 03.04.1996
(73) Proprietor: E.I. DU PONT DE NEMOURS AND COMPANY, Wilmington Delaware 19898 (US)
(72) Inventor: HAGMAN, John, Francis, Wilmington, DE 19810-3801 (US); STATZ, Robert, Joseph, Kennett Square, PA 19348-1624 (US)
(74) Representative: von Kreisler, Alek, Dipl.-Chem.
(86) International application number: US9406348
(87) International publication number: WO9500212

(56) References cited:
- EP-A- 0 490 619
- US-A- 5 120 791

## Description

### BACKGROUND OF THE INVENTION

### Field of the Invention

The invention relates to materials useful in golf ball covers. More particularly, it relates to blends of soft, flexible and very hard, stiff ethylene copolymer ionomers. The hard ionomers have very high levels of acid comonomer which when neutralized provide very high stiffness. Nevertheless blends with conventional soft ionomers provide cover material which allows production of balls with balanced properties in use as well as acceptable durability.

### Background of the Invention

Hard, stiff ethylene copolymer ionomer resins have long been known for use as golf ball cover materials because they produce greater resilience and cut resistance in balls compared with the long used soft balata. These hard ionomers are copolymers of ethylene and an acid comonomer, neutralized with metal ions. Playability of balls, particularly spin however, was inferior to balata covered balls. When softer more flexible ionomers, which have an additional 'softening monomer', became available, it was found that blends of these with the long known hard ionomers provided balls with a good balance of playability and resilience with durability as measured by cut resistance.

Blends of hard and soft ionomers were first disclosed by E.I. du Pont de Nemours & Co. as Article #27103 in the Research Disclosure Journal, Emsworth Studios, New York, in November 1986. The blends disclosed comprised 50 wt.% or more soft ionomer and 50 wt.% or less hard ionomer, and had a balance of 'feel', 'spin' and cut resistance.

Later, U.S. Patent No. 4,884,814 (Sullivan), issued December 5, 1989, disclosed blends of 75-25 and 25-75 wt.% of hard and soft ionomer having defined flexural modulus ranges of 30,000 to 50,000 psi and 3,000 to 7,000 psi respectively (206850 to 344750 and 20685 to 48265 KN/m² respectively), with zinc or sodium neutralizing ions. Within this range, balanced properties could be achieved in terms of spin, feel and cut resistance. This patent discusses in some detail qualities required in golf balls, and is hereby incorporated by reference. The Assignee on the patent is shown as Spalding and Evenflo Companies, Inc.

A further patent, U.S. Patent No. 5,120,791 (Sullivan), issued June 9, 1992, but terminally disclaimed to coincide with the expiration of the above Sullivan patent, discloses a further hard/soft ionomer blend where the soft ionomer is specifically limited to an acrylic acid terionomer rather than terionomers with various acids. The disclosure indicates that utilization of this specific soft ionomer provides a broad blending range of 90-10 and 10-90 wt.% and a broad modulus range of 15,000-70,000 psi and 2,000-10,000 psi (103425-482650 and 13790-68950 KN/m²) for the hard and soft ionomers respectively which give suitable cover material for balls. This patent is also hereby incorporated by reference.

'Durability' as applied to golf balls has been used in several different senses. In the above patents, cut resistance was emphasized as a measure of durability. The term has also been used for impact and crack resistance, and particularly at low temperatures. All types of durability are important. U.S. Patent 3,819,768 (Molitor) disclosed blends of two hard ionomers neutralized with different ions, namely zinc and sodium. Here zinc ionomers were shown to provide improved 'cold crack' resistance.

Higher acid levels of greater than 15 wt.% in ethylene copolymer ionomers are known to produce resins with higher stiffness and hardness than ionomers with lower acid levels. This is disclosed in Research Disclosure Journal, January 1989, Article #29703, where it is noted such resins will be useful in many articles, including golf balls, or in blends with other ionomers or polymers, where greater stiffness and hardness is desired.

Research Disclosure Journal, Article #27221, December 1986, discloses that higher hardness, cut resistance and Coefficient of restitution (COR) is also shown by lithium ionomers at unspecified acid level, compared with zinc and sodium ionomers, and that these same properties will be carried through when used in golf ball shells, i.e. covers. Both high acid ionomers, and lithium ionomers however, would be expected to impart poor playability with respect to spin, if used alone in golf ball covers.

Allowed U.S Patent Application No. 07/829,844, filed 1/31/92, discloses that very high resilient materials, suitable for use in specific types of golf ball covers, can be obtained from high acid ethylene/acid copolymer ionomers when the neutralizing ions are both lithium and zinc, and optionally sodium. The disclosure also shows that when certain blends of ions are used, particularly sodium and lithium and zinc and lithium, higher Coefficient of restitution values are obtained for similar PGA Compression values than when a single ion, particularly sodium alone is used. The balance of these two properties is a useful guide to the utility of a material as cover material for a ball with balanced play characteristics. The resilient compositions disclosed, however, are too stiff to provide cover materials for golf balls which have excellent spin. The Application is hereby incorporated by reference.

European Patent Application EP-A-0 490 619 discloses blends of hard and soft ionomers where the sole hard ionomer is a lithium ionomer, and the sole soft ionomer is a sodium ionomer. These two ionomers were selected despite the availability of both soft and hard ionomers of several other metals.

Thus, while several ionomers are known which give high flexural modulus above 50,000 psi, or 70,000 for acrylic acid soft ionomer, the prior art has not indicated any utility for such resins in blends with soft ionomers for golf ball covers, except for the selected case of sodium soft ionomer and lithium hard ionomer.

It would be highly desirable to provide the versatility of an extended range of ionomer blends useful as compositions for golf ball cover materials.

### SUMMARY OF THE INVENTION

The invention is directed to the discovery that ionomers which are extremely stiff and hard, which alone would give golf ball covers with very poor playability, especially spin, are amenable to blending with soft ionomers to give materials which are highly suitable for golf ball covers for balls when balanced performance characteristics are desired.

Specifically the invention is to a golf ball comprising a core and a cover, wherein the cover comprises:
a) from about 15 to 85 weight percent of a soft ionomer component which is a partially neutralized copolymer of ethylene, an alkyl acrylate, and acrylic or methacrylic acid or both, or a blend of such copolymers, the soft ionomer component having a flexural modulus of from 1,000 to 10,000 psi (6895-68950 KN/m²), and
b) from about 85 to 15 weight percent of a hard ionomer component which is a partially neutralized copolymer of ethylene and 14 to 22 total weight percent acrylic or methacrylic acid or both, or a blend of such copolymers, the hard ionomer component having a flexural modulus of from above 50,000 psi to about 110,000 psi (344750 to about 758450 KN/m²), except that if acrylic acid is the sole acid used in the soft ionomer component, the modulus is from above 70,000 to about 110,000 psi (482650 to about 758450 KN/m²),
the blend of soft ionomer component and hard ionomer component having a flexural modulus between 5,000 and 35,000 psi (34475 and 241325 KN/m²).

### DETAILED DESCRIPTION OF THE INVENTION

In this disclosure, the term copolymer is used to refer to polymers containing units derived from two or more monomers. The term bipolymer or terpolymer refers to a polymer containing units derived from only two or three monomers respectively. For brevity copolymers may be referred to as 'containing' or 'of' a given monomer rather than 'containing units derived from' a given monomer. The term 'direct' copolymer refers to a polymer containing randomly distributed comonomer units, polymerized by combining all monomers simultaneously, as distinct from graft copolymers where a monomer is grafted onto an existing polymer and may result in a chain of graft units of that monomer.

The ionomers of this invention are direct ethylene copolymers containing an acid monomer which is partially neutralized with metal ions. Acid monomers, when partially neutralized, are not considered to be separate monomers for the purposes of the terminology in this invention.

The compositions used in this invention are blends of hard, stiff ionomers derived from direct copolymers of ethylene, methacrylic acid or acrylic acid and soft, flexible ionomers which are ethylene copolymers which also contain alkyl acrylates. While there is not a unique correlation, between hardness and stiffness, hard ionomers are stiffer, while soft ionomers are more flexible. When there is a large difference in flexibility of resins, there will be a large difference in hardness. Within narrow ranges of flexibility, hardness and flexibility are not so clearly directly related. Flexural modulus has been used as a limitation in the ionomers of the invention. Prior art has tended to use the term 'hard' and 'soft' ionomers rather than 'stiff' and 'flexible'. In this disclosure, the terms 'hard' and 'soft' are maintained, even though the numerical property limitations of 'hard' and 'soft' ionomers and ionomer components are given in terms of flexural modulus values rather than hardness values.

Methods of preparing such ionomers are well known, and are described in U.S. Patent No. 3,264,272 which is hereby incorporated by reference. Preparation of these direct acid copolymers on which the ionomers are based is described in U.S. Patent No. 4,351,931 which is also incorporated by reference hereby.

Single ionomers, with an intermediate level of hardness or flexibility, do not possess sufficient durability, particularly cut resistance, when they have a hardness or stiffness level designed to provide balanced play characteristics. The concept of blending hard and soft polymers, and more particularly hard and soft ethylene/carboxylic acid ionomers to provide a golf ball cover material which, with suitable cores, gives a ball with both durability and balanced playing characteristics, has been known in the art generally since 1986. However, this general concept, when refined to specifics, as taught in the patent literature, taught only that suitable hard ionomers could have a flexural modulus up to 50,000 psi (344750 KN/m²), extendable to 70,000 psi (482650 KN/m²) when the soft ionomer was prepared from acrylic acid rather than methacrylic or other carboxylic acids.

Surprisingly, it has now been found that these modulus limits of the hard ionomer can readily be exceeded, and still produce desirable golf ball covers having durability and balanced play characteristics.

Hard ionomers suitable for the purposes of this invention are ethylene copolymers with acrylic or methacrylic acid, having an acid level of from 14 to 22 weight percent, partially neutralized, from 10 to 90%, with metal ions. The hardness is provided by high acid level but also depends on the ion type. Suitable ions include sodium, magnesium and lithium. Lithium ions provide very hard ionomers compared with other ions, and acid levels of 14 weight percent are suitable with lithium ionomers. When sodium ions are the neutralizing species, somewhat higher levels of acid are required, generally above about 17 weight percent. Other ions can be used, such as magnesium, except that in the case of zinc, even with high acid levels, the modulus does not significantly exceed 50,000 psi (344750 KN/m²). Levels of acid above about 22 weight percent tend to produce ionomers with lower melting points, which when used as cover material give balls which tend to soften in hot weather. When the flexural modulus is above 110,000 (758450) the hardness is too great to take advantage of blending with a soft ionomer to achieve the blend flexural modulus required. Generally, the hard ionomers are bipolymers, though they may be terpolymers when more than one carboxylic acid is used, or when minor small amounts of another monomer is present. Thus the very stiff, high acid lithium ionomers could have a small amount of an alkyl acrylate present, and still be hard ionomers.

It will be recognized that some combinations of the acid level, ion type, and level of neutralization indicated above may provide a resin with a modulus outside the required range. It is within the skill of the artisan to measure the modulus to determine whether the resin is suitable for the purposes of this invention.

Soft ionomers are copolymers containing both an acid monomer and a 'softening' monomer, the acid monomer being neutralized between 10 and 90% with metal ions. Generally they are terpolymers though they could contain more monomers such as a mix of acid monomers and a mix of softening monomers. The preferred softening monomers used are alkyl acrylates having an alkyl group with 1 to 8 carbon atoms. Levels of alkyl acrylate from 15 to 35 weight percent are suitable. N-butyl acrylate and iso-butyl acrylate are useful, because these monomers give polymers which are particularly prone to remain soft and tough at low temperatures. The acid used may be acrylic or methacrylic acid or both. Levels of from 4 to 15 weight percent are suitable. The flexural modulus of the soft ionomer suitable for the blends of this invention may be from 1,000 to 10,000 psi (6895 to 68950 KN/m²). Below 1,000 psi (6895 KN/m²) it will not be possible to achieve a blend with a hard ionomer with a resultant flexural modulus above 5,000 psi (34475 KN/m²). The ion used to neutralize the soft ionomer include sodium, zinc, magnesium or lithium.

It will be recognized that, just as with the hard ionomers, within the range of acid and alkyl acrylate which may be used, and with variation of the particular acrylate, the ion used for neutralizing, and the level of neutralization, some combinations may give a modulus outside the required range, and such combinations will be unsuitable. It is within the skill of the artisan, to measure whether a particular combination gives an unsuitable modulus.

More than one soft ionomer may be blended together to provide a 'soft ionomer component'. The comprehensive term soft ionomer component is used to encompass a single soft ionomer and such a soft ionomer blend. Blending of two soft ionomers provides versatility. Thus, with a 'stable' of a few soft ionomers, a large number of soft ionomer components having different modulus, mixed ions, varying acid levels and softening monomer can be prepared. This avoids the need to prepare a new ionomer having the needed characteristics. In a blend, each may have a different level of acid, a different acid, a different alkyl acrylate, a different ion type and a different level of neutralization. The important characteristic of the soft ionomer component whether a single ionomer or a blend is that the single or blend polymer should have a flexural modulus in the specified range.

Analogously, more than one hard ionomer may be blended together. The important thing is that the hard ionomer component whether a single ionomer or a blend of two hard ionomers, has a flexural modulus in the specified range. As with the term soft ionomer component, 'hard ionomer component' is used to accommodate the possibility of such a blend of individual hard ionomers.

The word 'blend' may thus be used in relation to the hard ionomer component itself, which may be a blend of two hard ionomers, or likewise to the soft ionomer component, or with regard to the composition of the invention being a blend of hard ionomer component and soft ionomer component. The terms 'hard ionomer component' and 'soft ionomer component' are used in the claims of this invention rather than the terms 'hard ionomer' and 'soft ionomer' common in the prior art, to make clear that the hard and soft components may themselves be blends.

The amount of hard ionomer component and soft ionomer component may each, range from 15 to 85 weight percent. Preferably the soft ionomer component comprises from 45 to 75 weight percent, and the hard ionomer component comprises 25 to 55 weight percent of the cover blend material.

The flexural modulus for hard and soft ionomers increases with increasing levels of neutralization up to about 30 to 40 %, and the melt flow decreases. Above 90 % neutralization, melt flow decreases strongly. Below 10%, the resilience associated with ionomers is low. Levels of neutralization between 20 and 70 percent are preferred. Neutralization of either or both of the soft and the hard ionomer may be with a single ion type, or mixed ions.

Melt Index of the ionomers can be from about 0.1 to 30. The melt index of the ethylene acid copolymers from which the ionomers are derived may be within the range of about 20 to 250. Some property/processability tradeoff is to be expected within these ranges, and preferred values for a given processability/property level can readily be determined.

Flexural modulus of the hard and soft ionomer components are in the range 1,000 to 10,000 and 50,000 to 110,000 psi (6895 to 68950 and 344750 to 758450 KN/m²) respectively, except that if the soft ionomer component has only acrylic acid as the acid monomer in it, the modulus of the hard ionomer is above 70,000 psi (482650 KN/m²). The final hard ionomer component/soft ionomer component blend has a modulus in the range 5,000 psi to 35,000 psi, preferably 5,000 to 20,000 (34475 to 241325 KN/m² preferably 34475 to 137900 KN/m²).

It has been found that within the ranges given above, certain ion types are preferred in the blends. When hard ionomers alone are blended, sodium and lithium blends give particularly good COR for a given PGA Compression, as taught in allowed U.S. patent Application 07/829,844, referred to above, and zinc has been taught as giving good low temperature crack resistance in U.S. 3,819,768 as also noted in the background section. Ion blending of this type can give further benefits in the balance of resilience, playability and durability achievable within the bounds of the specific hard/soft ionomer blending of the present invention.

The cover materials of this invention may also contain small amounts of additives as is well known in the art. Such additives include pigments, fillers, dispersants, antioxidants, U.V. absorbers, brighteners and the like.

### TESTING CRITERIA

In testing the suitability of the polymeric cover compositions of this invention, ideally, tests should be carried out on golf balls with a variety of cores. Such is the preferred method for golf ball manufacturers. It is generally acknowledged however, that the properties of the cover material itself will be reflected to a considerable extent in the behavior of a covered ball, even though a complex interaction of core and cover characteristics and cover thickness etc. will exist.

The properties of the neat cover material itself have been found useful in predicting ball behavior. Except for flexural modulus, spheres of the size of a typical core were molded, and typical ball properties measured on them. In the examples below, properties were generally determined in this way, on the cover material alone, and in a few cases, on balls covered with the material. Durability in terms of repeated impact, however, was determined on finished balls.

In the examples set out below, a number of tests are used in the evaluation of the ionomer blends of this invention: Coefficient of restitution or COR, PGA Compression, hardness, flexural modulus and durability. In the golf ball industry, these tests have been carried out under a bewildering variety of test conditions, so that it is difficult or even impossible to compare values of one set of data with another unless the tests are clearly identical.

The COR of the neat cover material is quite strongly reflected in the COR of a ball covered with such a material, and this in turn is a guide to the 'length' or distance a ball will travel when struck. Higher CORs give better (greater) length and greater velocity for a given impact.

The COR of the neat cover material also shows a direct relationship with flexural modulus, hardness and PGA Compression. By contrast, playability of a golf ball and its spin will show an inverse relationship to high values of hardness, flexural modulus and PGA Compression of the cover material, for the same core.

The best correlation of playability may be with PGA Compression. Thus when the cover material shows acceptable values of COR, yet not too high PGA Compression, a ball utilizing such a material will have balanced playability with regard to spin, and length.

Flexural modulus of the final hard component/soft component blend is fairly readily predictable from the moduli of the hard and soft components, so that flexural modulus of the blend material used for the cover serves as a very rough, 'first approximation' guide to the playability balance characteristics of a ball using the material as its cover. The higher the flexural modulus, the greater the length to be expected, but the poorer the spin, and vice versa.

The modulus limits of the final blend of between 5,000 and 35,000 psi (34475 and 241325 KN/m²) will provide cover material for balls with a range of characteristics. Balata with a range of modulus from about 5,000 to 20,000 psi (34475 to 137900 KN/m²) is used for golf ball covers, so that the materials of this invention span the balata range and a little more. Balata covers of course, provide poor durability. A different balance of play characteristics may be desirable for different players. A highly desirable ball will have greater length and the high spin of a balata ball. While the blends of the present invention when used as a cover material will impart an excellent combination of length and spin, there will usually be a tradeoff between these characteristics.

In comparing blends of the present invention, with prior art cover material blends, values of COR and PGA Compression, measured on solid spheres of the blends, may be compared with corresponding values of the prior art blends. As will be seen from the examples, a comparable balance is achieved. The blends of the invention also provide good values for durability as measured on finished balls, as will also be seen from the examples.

### Test Methods.

In the examples, the COR of the ionomer blends themselves was measured by firing a sphere of the ionomer composition, from an air cannon at an initial speed of 180 ft./sec (55 m/sec). as measured by a speed monitoring device over a distance of 3 to 6 feet (0.9 to 1.8 m) from the cannon. The ball strikes a steel plate positioned 9 feet (2.7 m) away from the cannon, and rebounds through the speed-monitoring device. The return velocity divided by the initial velocity is the COR. Acceptable values for COR are above 0.580, good values are above 0.600, and very good values are above 0.620. COR on golf balls was also measured in a few cases. The same method was used. The core used was a standard core generally available in the industry typically made from cis 1,4-polybutadiene, zinc acrylate crosslinking agent, peroxide, and other additives such as antioxidants and fillers.

PGA Compression is defined as the resistance to deformation of a golf ball, measured using a standard industry ATTI machine. For adequate spin of a ball using the blends of the invention as cover material, PGA Compression of the ionomer blend cover material itself should be less than about 150. Better spin will correspond to values of less than 125, and very good spin to values less than 110. PGA Compression was also measured on finished balls, using the same method, as with the core, as described above.

Typical intermediate playability of balls will be achievable when the COR of the cover material shows values of between 0.590 and 0.620 for COR and the PGA Compression shows values between 115 and 130.

Shore hardness (D scale) was measured on the cover material itself using ASTM D-2240.

Flexural modulus was measured using ASTM D-790-B. It is a characteristic of the material itself, and is measured on a standard bar, rather than a sphere of the material. This test is not carried out on finished balls.

Melt Index was measured using ASTM D-1238, condition E, at 190 deg. C. using a 2160 gram weight.

Durability was measured using a repeat impact test on finished balls with the material of the invention as the cover using the same machine as for COR, but using an initial velocity of 175 ft./sec (53 m/sec). Durability values are the number of hits to break. Durability at low temperatures is especially desirable, and for this reason, durability tests at -20 deg. F. (-29°C) were carried out. While good durability only at room temperature is adequate for golf balls used in some locals, low temperature durability values, preferably above at least 10 (-12°C), is preferred for cold weather use.

### EXAMPLES

The ionomer resins used in making the blends are listed in Table 1. Resins S1 to S3 are soft terpolymer resins, while resins H1 to H7 are hard bipolymer resins.

Several blend compositions, some within the bounds of the invention and some outside, are shown in Table 2. Those outside the invention are marked with an asterisk.

Compositions 1 and 2 are blends of hard and soft ionomer components where the hard ionomer has a modulus of less than about 50,000 psi (344750 KN/m²), and where all ionomers use methacrylic acid as the acid monomer. They are prior art hard/soft ionomer blends, and represent cover material for balls with a typical balance of play characteristics. Flexural modulus and three properties carried out on molded golf ball core size spheres were measured. Compositions 3 through 8 are cover material compositions within the invention. They were made to span about the same modulus range as compositions 1 and 2. Properties are generally comparable to those of prior art blends.

Previous measurements for a large number of compositions show that, to a first approximation, as a blend is made to be stiffer, an increase in 8 units in PGA Compression will increase COR by about 0.009 units. This correlation is useful in comparing values of COR and PGA Compression.

Compositions which use more than one metal ion, in the hard ionomer and/or in the soft ionomer component, compositions 3, 4 and 6, may have slightly higher COR relative to their PGA compression than compositions 5, 7 and 8 which utilize only sodium as the neutralizing ion. This is consistent with prior art findings noted previously. Composition 6, when PGA Compression and COR are extrapolated down to correspond to a slightly softer resin, using the correlation above, has an almost identical balance of PGA compression and COR to the prior art compositions.

Compositions 9 though 18 are stiffer compositions. Composition 17 is outside the stiffness range of the ionomer blends of this invention. All show higher COR and PGA Compression values. All compositions have an acceptable balance of properties as measured on the material alone. Compositions 9 and 10, which are the only all sodium ionomer blends, have the poorest PGA compression/COR correlation (high PGA compression/low COR), which again is consistent with prior art. Most of the blends provide a reasonable balance of properties in a ball using those blends as cover materials, and an excellent level of durability at room temperature. The prior art suggests durability at low temperatures for hard ionomers alone can be superior when zinc ion is present, and this was also the case in the hard/soft ionomer blends of the present invention.

In summary, when very hard ionomers, with modulus above 50,000 psi are used in soft/hard ionomer blends, those blends have a good balance of properties. When such blends are used as a cover material, they will provide a ball with a useful balance of play characteristics.

**TABLE 1**

| IONOMER RESINS USED IN BLENDS | | | | | | |
|---|---|---|---|---|---|---|
| CODE | MI | COMPOSITION | NEUT. | FLEX.MODULUS | PGA | COR |
| S1 | 0.9 | E/17nBA/10MAA | Na(∼50) | 8,000 | 108 | 0.588 |
| S2 | 0.9 | E/23nBA/9MAA | Na(∼50) | ∼3,700 | 45 | 0.534 |
| S3 | 0.6 | E/23nBA/9MAA | Zn(∼50) | ∼2,700 | 58 | 0.511 |
| H1 | 1.0 | E/15MAA | Na(∼57) | ∼50,000 | 170 | 0.673 |
| H2 | 0.7 | E/15MAA | Zn(∼57) | 48,000 | 164 | 0.637 |
| H3 | 1.8 | E/15MAA | Li( 52) | 68,000 | 168 | 0.691 |
| H4 | 2.6 | E/15MAA | Li( 47) | 68,000 | - | - |
| H5 | 1.0 | E/20MAA | Na( 46) | 79,000 | 182 | 0.702 |
| H6 | 2.6 | E/20MAA | Na( 35) | 79,000 | - | - |
| H7 | 1.0 | E/20MAA | Li( 50)e | 90,000 | 187 | 0.718 |
| PGA = PGA Compression. COR = Coefficient of Restitution. NEUT. = Neutralizing ion and (percent neutralization). e = estimate. - indicates not measured. E = Ethylene, MAA = Methacrylic Acid, nBA = n-Butyl Acrylate Numbers before monomer codes refer to weight percent in polymer. M.I. is Melt Index. | | | | | | |

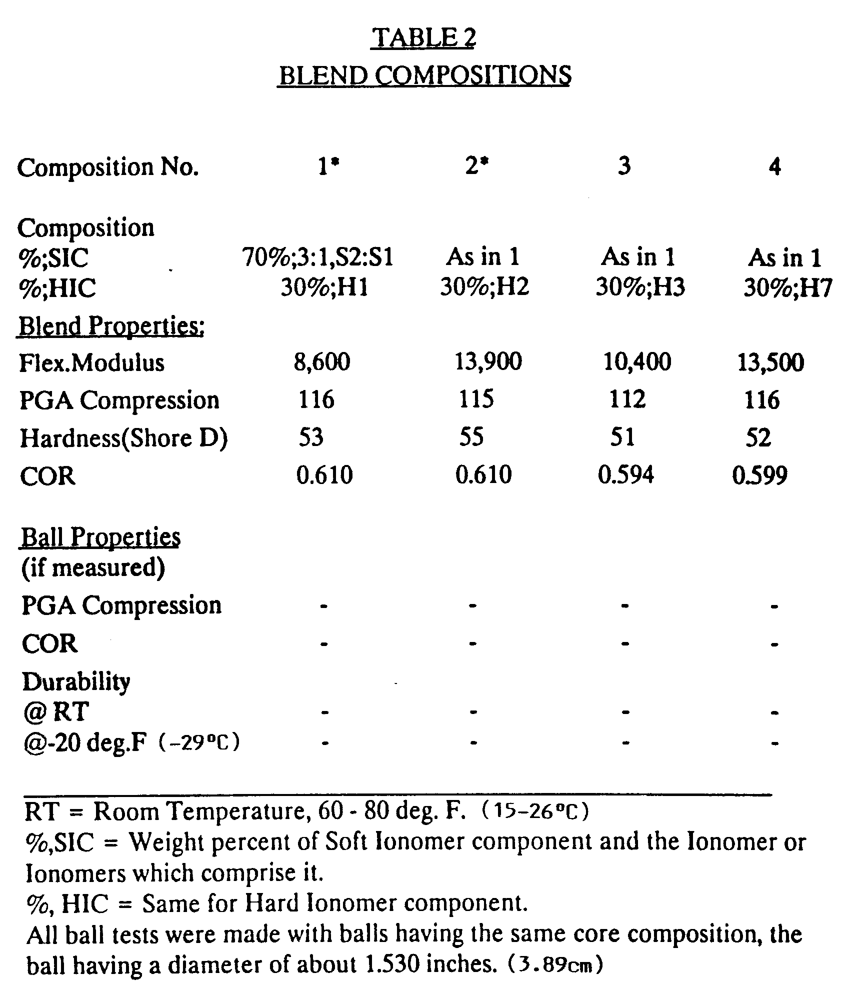

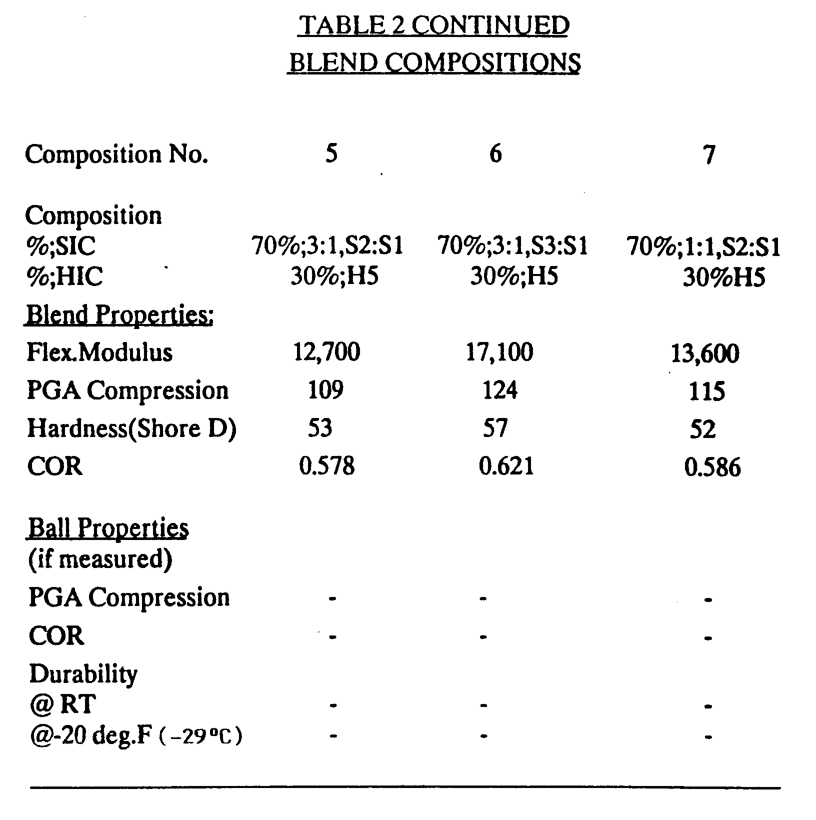

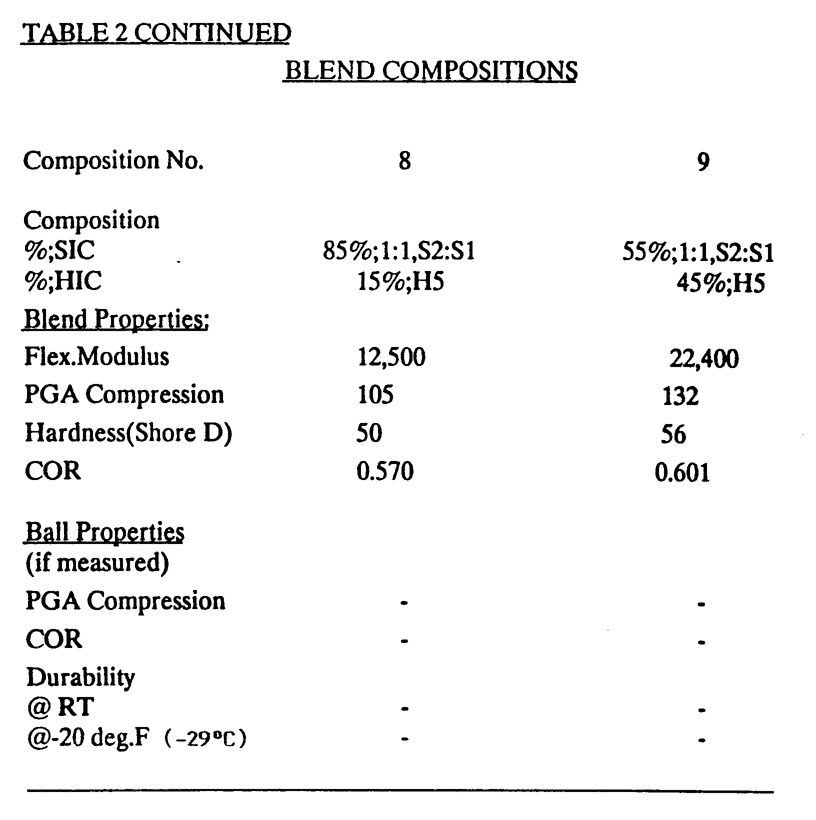

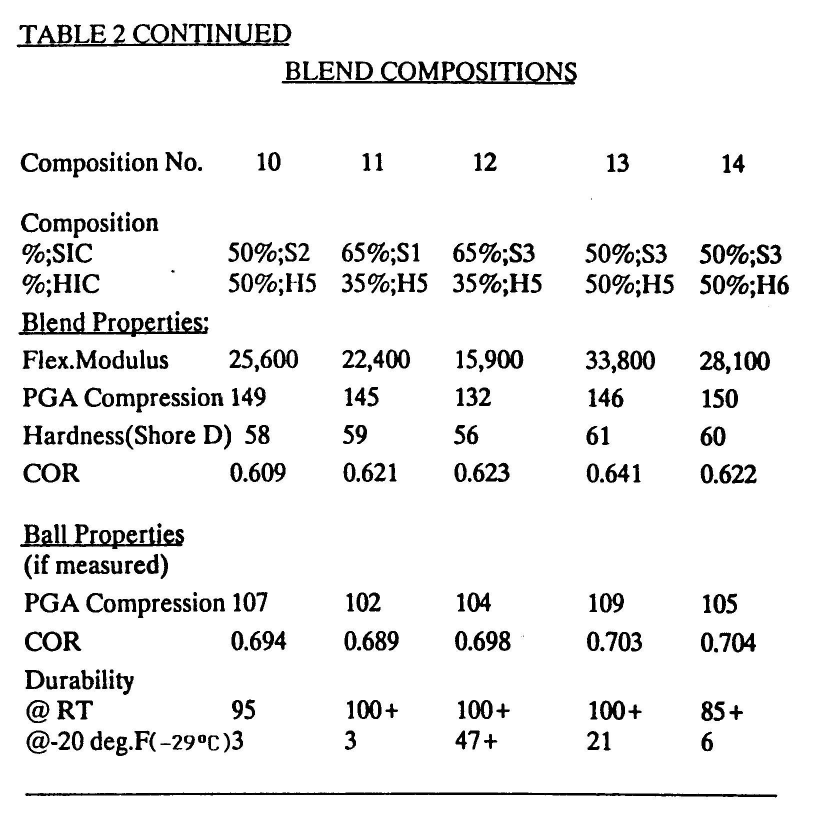

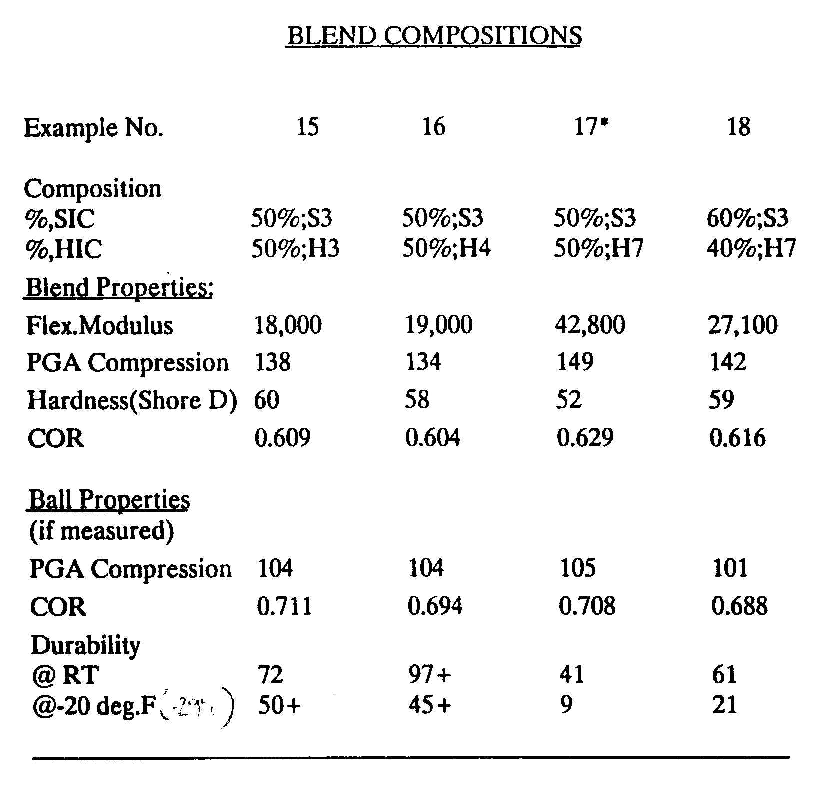

## Claims

1. A golf ball comprising a core and a cover, wherein the cover comprises:
a) 15-85 wt.% of a soft ionomer component which is a partially neutralized soft copolymer of ethylene, an alkyl acrylate and acrylic or methacrylic acid or both, or a blend of such soft copolymers, the soft ionomer component having a flexural modulus of from about 1,000 to 10,000 psi (6895 to 68950 KN/m²), and
b) 85-15 wt.% of a hard ionomer component which is a partially neutralized hard copolymer of ethylene and 14-22 total wt.% acrylic or methacrylic acid or both, or a blend of such hard copolymers, the hard ionomer component having a flexural modulus of from above 50,000 psi to about 110,000 psi (344750 to about 758450 KN/m²),
with the proviso that if acrylic acid is the sole acid in the soft ionomer component, the flexural modulus is from above 70,000 psi to about 110,000 psi (482650 to about 758450 KN/m²), and with the further proviso that if the hard ionomer is a lithium ionomer, the soft ionomer is not a sodium ionomer,
the blend of a) and b) having a flexural modulus of between 5,000 and 35,000 psi (34475 and 241325 KN/m²).

2. The golf ball of Claim 1, wherein the blend of a) and b) has a flexural modulus of from 5,000 to 20,000 psi (34475 to 137900 KN/m²).

3. The golf ball of Claim 1, wherein the blend of a) and b) contains more than one neutralizing metal ion, each of the more than one ion being selected from the group consisting of sodium, lithium, zinc and magnesium.

4. The golf ball of claim 1, wherein the blend of a) and b) comprises 45 to 75 weight percent a) and 25 to 55 weight percent of b).

## Patentansprüche

1. Golfball, umfassend einen Kern und eine Hülle, wobei die Hülle umfaßt:
a) 15-85 Gew.-% einer weichen Ionomerkomponente, bei der es sich um ein partiell neutralisiertes weiches Copolymer von Ethylen einem Alkylacrylat und Acryl- oder Methacrylsäure oder beiden oder um ein Gemisch solcher weichen Copolymere handelt, wobei die weiche Ionomerkomponente einen Biegemodul von etwa 1000 bis 10 000 psi (6895 bis 68 950 kN/m²) hat; und
b) 85-15 Gew.-% einer harten Ionomerkomponente, bei der es sich um ein partiell neutralisiertes hartes Copolymer von Ethylen und 14-22 Gew.-% des Gesamtgewichts an Acryl- oder Methacrylsäure oder beiden oder um ein Gemisch solcher harten Copolymere handelt, wobei die harte Ionomerkomponente einen Biegemodul von über 50 000 psi bis etwa 110 000 psi (344 750 bis etwa 758 450 kN/m²) hat;
mit der Maßgabe, daß der Biegemodul, wenn Acrylsäure die einzige Säure in der weichen Ionomerkomponente ist, über 70 000 psi bis etwa 110 000 psi (482 650 bis etwa 758 450 kN/m²) beträgt, und mit der weiteren Maßgabe, daß das weiche Ionomer kein Natriumionomer ist, wenn das harte Ionomer ein Lithiumionomer ist,
wobei das Gemisch aus a) und b) einen Biegemodul zwischen 5000 und 35 000 psi (34 475 und 241 325 kN/m²) hat.

2. Golfball gemäß Anspruch 1, wobei das Gemisch aus a) und b) einen Biegemodul von 5000 bis 20 000 psi (34 475 bis 137 900 kN/m²) hat.

3. Golfball gemäß Anspruch 1, wobei das Gemisch aus a) und b) mehr als ein neutralisierendes Metallion enthält, wobei jedes dieser mehreren neutralisierenden Metallionen aus der Gruppe ausgewählt ist, die aus Natrium, Lithium, Zink und Magnesium besteht.

4. Golfball gemäß Anspruch 1, wobei das Gemisch aus a) und b) 45 bis 75 Gew.-% a) und 25 bis 55 Gew.-% b) umfaßt.

## Revendications

1. Une balle de golf comprenant un noyau et une enveloppe, dans laquelle l'enveloppe comprend :
a) 15 à 85 % en poids d'un composant ionomère mou qui est un copolymère mou, partiellement neutralisé, d'éthylène, d'un acrylate d'alkyle et d'acide acrylique ou méthacrylique ou des deux, ou un mélange de tels copolymères mous, le composant ionomère mou ayant un module en flexion d'environ 6895 à 68 950 kN/m² ; et
b) 85 à 15 % en poids d'un composant ionomère dur qui est un copolymère dur, partiellement neutralisé, d'éthylène et de 14 à 22 % en poids au total d'acide acrylique ou méthacrylique ou des deux, ou un mélange de tels copolymères durs, le composant ionomère dur ayant un module en flexion de plus de 344 750 à environ 758 450 kN/m² ;
avec la condition que Si l'acide acrylique est le seul acide dans le composant ionomère mou, le module en flexion soit de plus de 482 650 à environ 758 450 kN/m² ; et avec l'autre condition que si l'ionomère dur est un ionomère de lithium, l'ionomère mou ne soit pas un ionomère de sodium,
le mélange de a) et b) ayant un module en flexion compris entre 34 475 et 241 325 kN/m².

2. La balle de golf de la revendication 1, dans laquelle le mélange de a) et b) a un module de flexion de 34 475 à 137 900 kN/m².

3. La balle de golf de la revendication 1, dans laquelle le mélange de a) et b) contient plus d'un ion métallique neutralisant, chacun de ces ions étant choisi dans le groupe formé par le sodium, le lithium, le zinc et le magnésium.

4. La balle de golf de la revendication 1, dans laquelle le mélange de a) et b) comprend 45 à 75 pour cent en poids de a) et 25 à 55 pour cent en poids de b).
